# EUROPEAN PATENT APPLICATION

(11) **EP 4 141 245 A1**
(43) Date of publication of application: **01.03.2023**
(21) Application number: 22187997.6
(22) Date of filing: 01.08.2022
(51) Int. Cl.: F02F 3/22

(54) **PISTON STRUCTURE OF ENGINE, ENGINE AND ENGINE SYSTEM**

(30) Priority: 31.08.2021 JP 2021141322
(71) Applicant: MAZDA MOTOR CORPORATION, Hiroshima 730-8670 (JP)
(72) Inventor: MATSUDA, Hirotsugu, Fuchu-cho, Aki-gun,730-8670 (JP); UCHIDA, Kenji, Fuchu-cho, Aki-gun,730-8670 (JP)
(74) Representative: Müller-Boré & Partner Patentanwälte PartG mbB

(57) **Abstract**

A piston structure of an engine includes a piston having a crown part including a crown surface defining a combustion chamber, and an opposite back surface, an oil jet, a center-side first cavity and an outer-circumference-side second cavity formed inside the crown part and partitioned from each other, each cavity including a ceiling surface on the combustion chamber side and an opposite bottom surface, a communicating hole that is formed in a partitioning wall between the cavities, an introduction hole that is formed in the bottom surface of the first cavity and introduces into the first cavity oil injected toward the back surface from the oil jet, and a discharge hole that is formed in the bottom surface of at least one cavity and discharges the oil. The ceiling surface of the second cavity is located on the combustion chamber side of the ceiling surface of the first cavity.

## Description

### TECHNICAL FIELD

The present disclosure relates to a piston structure of an engine, an engine, and an engine system.

### BACKGROUND OF THE DISCLOSURE

A piston of an engine easily increases in temperature because it is in contact with a hot combustion chamber. Therefore, a configuration for cooling the piston is known, in which a cooling channel is provided inside the piston, and oil injected from an oil jet is introduced into the cooling channel.

For example, a piston of an engine disclosed in JP2019-052628A is provided with a crown part and a cooling channel. The crown part has a crown surface which defines a combustion chamber, and a back surface on the opposite side of the crown surface. The cooling channel is formed inside the crown part (i.e., between the crown surface and the back surface) into a C-ring shape so as to conform to an outer circumference of the crown part.

Meanwhile, there is CI (Compression Ignition) combustion as a combustion mode of the engine, which is combustion that starts by a mixture gas inside the combustion chamber carrying out compressed self-ignition. As the present inventors investigated a starting position of the compressed self-ignition of the mixture gas inside the combustion chamber, they discovered that the compressed self-ignition of the mixture gas was started toward a center side of the combustion chamber rather than an outer circumference side.

Particularly, when the piston according to JP2019-052628A is used, the mixture gas on the outer circumference side of the combustion chamber tends to decrease in temperature because its heat is taken away by oil flowing through the cooling channel. Therefore, the temperature of the mixture gas on the center side of the combustion chamber becomes relatively higher than that on the outer circumference side, and thereby, the compressed self-ignition of the mixture gas easily starts at the center side of the combustion chamber, more notably compared with a case where a piston without the cooling channel is used.

When the compressed self-ignition of the mixture gas is started at the center side of the combustion chamber, the mixture gas on the outer circumference side of the combustion chamber becomes difficult to combust, and therefore, unburnt fuel loss increases.

### SUMMARY OF THE DISCLOSURE

The present disclosure is made in view of this regard, and one purpose thereof is to achieve both cooling of the piston, and a reduction in unburnt fuel loss of a mixture gas inside a combustion chamber during compression ignition.

According to one aspect of the present disclosure, a piston structure of an engine is provided, which includes a piston having a crown part including a crown surface defining a combustion chamber, and a back surface on the opposite side of the crown surface, an oil jet that injects oil toward the back surface, and a first cavity and a second cavity formed inside the crown part, the first cavity and the second cavity being partitioned from each other, the first cavity being located on a center side, and the second cavity being located on an outer circumference side of the first cavity. Each of the first cavity and the second cavity includes a ceiling surface on a combustion chamber side and a bottom surface on the opposite side of the combustion chamber. The structure includes a communicating hole that is formed in a partitioning wall between the first cavity and the second cavity and communicates the first cavity with the second cavity, an introduction hole that is formed in the bottom surface of the first cavity and introduces into the first cavity the oil injected toward the back surface from the oil jet, and a discharge hole that is formed in the bottom surface of at least one of the first cavity and the second cavity and discharges the oil. The ceiling surface of the second cavity is located on the combustion chamber side of the ceiling surface of the first cavity.

According to this structure, the oil injected toward the back surface of the crown part from the oil jet is introduced into the first cavity on the center side via the introduction hole, then flows into the second cavity on the outer circumference side via the communicating hole. The oil is discharged to the exterior of the crown part from the discharge hole formed in the bottom surface of the first cavity or the second cavity. Therefore, the oil circulates inside the crown part to cool the crown part.

Since the ceiling surface of the second cavity is located on the combustion chamber side of the ceiling surface of the first cavity, the oil which flowed into the second cavity via the communicating hole is not filled up in the second cavity, and therefore the oil does not reach the ceiling surface. Therefore, an air layer is formed near the ceiling surface of the second cavity.

The heat of the mixture gas on the center side in the combustion chamber is taken away by the oil which flows through the first cavity, and the mixture gas easily decreases in temperature. On the other hand, the mixture gas on the outer circumference side in the combustion chamber is insulated by the air layer formed near the ceiling surface of the second cavity, and decreasing the temperature is difficult. Therefore, the temperature of the mixture gas on the outer circumference side in the combustion chamber becomes higher than the temperature of the mixture gas on the center side in the combustion chamber.

Therefore, during compression ignition, compressed self-ignition of the mixture gas first starts on the outer circumference side of the combustion chamber, and compressed self-ignition of the mixture gas then takes place on the center side of the combustion chamber. Therefore, the unburnt fuel loss of the mixture gas inside the combustion chamber during the compression ignition decreases.

As described above, both the cooling of the piston and the unburnt fuel loss reduction in the mixture gas inside the combustion chamber during the compression ignition can be achieved.

The discharge hole may be formed in the bottom surface of the first cavity, and a distance between the discharge hole in the first cavity and the communicating hole may be shorter than a distance between the introduction hole and the communicating hole.

According to this structure, as compared with a case where the distance between the discharge hole in the first cavity and the communicating hole is longer than the distance between the introduction hole and the communicating hole, it becomes difficult for the oil inside the first cavity to flow into the second cavity via the communicating hole. Therefore, the air layer becomes much more easily formed near the ceiling surface of the second cavity.

The second cavity may have an annular shape surrounding the entire circumference of the first cavity.

According to this structure, the compressed self-ignition of the mixture gas is started from the outer circumference side throughout the circumference of the combustion chamber.

A surface area of the ceiling surface of the second cavity may be larger than a surface area of the ceiling surface of the first cavity.

According to this structure, the volume of the air layer formed near the ceiling surface of the second cavity can be further increased.

The discharge hole may be formed in the bottom surface of both the first cavity and the second cavity.

According to this structure, since the discharge hole is formed in the bottom surface of the first cavity, it is difficult for the oil in the first cavity to flow into the second cavity via the communicating hole. Further, since the discharge hole is formed in the bottom surface of the second cavity, the oil which flowed into the second cavity via the communicating hole is rapidly discharged from the discharge hole to the exterior of the crown part. Therefore, it becomes more difficult for the oil to fill the second cavity and reach the ceiling surface. Therefore, the air layer easily forms near the ceiling surface of the second cavity.

Particularly, an engine included the above piston structure.

According to another aspect of the present disclosure, an engine system including the piston structure described above is provided, which is configured to switch a combustion mode between compression ignition combustion and spark ignition combustion. Particularly, an engine system includes an engine with the piston structure described above. The engine may be configured to switch a combustion mode between compression ignition combustion and spark ignition combustion. The engine system or the engine includes an oil pump that supplies the oil to the oil jet via a main gallery, and a controller that sets a discharge pressure of the oil pump based on the combustion mode, the controller being configured to control the oil pump to reduce a discharge pressure of the oil pump when the combustion mode is the compression ignition combustion, as compared with a case where the combustion mode is the spark ignition combustion.

According to this configuration, since the oil injection amount from the oil jet during compression ignition combustion becomes less than during spark ignition combustion, it is difficult for the oil to fill the second cavity, and the air layer easily forms near the ceiling surface of the second cavity.

As described above, during compression ignition combustion in which the temperature of the mixture gas on the outer circumference side in the combustion chamber needs to be higher, the air layer can be positively formed near the ceiling surface of the second cavity, and on the other hand, during spark ignition combustion in which the temperature of the mixture gas on the outer circumference side in the combustion chamber does not need to be higher, a small air layer is formed near the ceiling surface of the second cavity.

### BRIEF DESCRIPTION OF DRAWINGS

Fig. 1 is an elevational cross-sectional view illustrating an engine according to one embodiment of the present disclosure.
Fig. 2 is an elevational cross-sectional view illustrating a piston.
Fig. 3 is a plane cross-sectional view illustrating the piston.
Fig. 4 is an enlarged view of IV part in Fig. 2.
Fig. 5 is a view illustrating an operating range map of the engine.
Fig. 6 is a block diagram illustrating a control mode of the engine.
Fig. 7 is a flowchart illustrating a control flow of the engine.
Fig. 8 is a graph illustrating a relationship between an oil pump discharge pressure and an oil jet injection amount in each operating range.

### DETAILED DESCRIPTION OF THE DISCLOSURE

Hereinafter, one embodiment of the present disclosure is described in detail with reference to the accompanying drawings. All of the features as shown in the drawings may not necessarily be essential. The description of the following desirable embodiment is merely illustration essentially, and it is not intended to limit the present disclosure, its application, or its use.

### (Configuration of Engine)

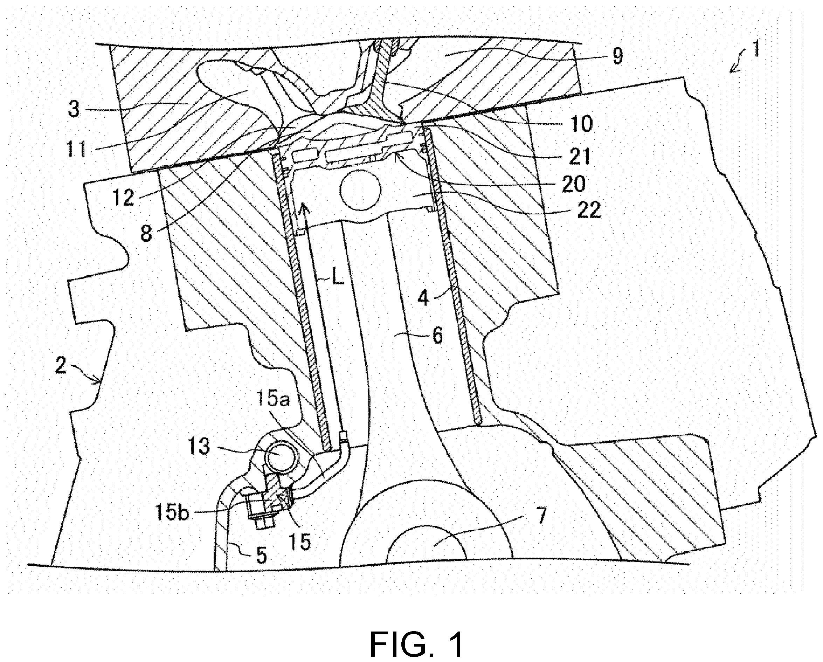

Fig. 1 is an elevational cross-sectional view illustrating an engine 1. The engine 1 may be configured to perform CI (Compression Ignition) combustion in a part of the operating range (for example, a low-load range). The engine 1 may also be configured to perform SI (Spark Ignition) combustion in a part of the operating range (for example, a high-load range). The CI combustion is combustion which is started by a mixture gas inside a combustion chamber carries out compressed self-ignition. The SI combustion is combustion accompanied by flame propagation, which is started by forcibly igniting the mixture gas inside the combustion chamber.

The CI may combustion include various kinds of combustion modes, such as HCCI (Homogeneous Charge Compression Ignition) combustion.

The engine 1 particularly includes a cylinder block 2 and a cylinder head 3. A plurality of cylinder bores 4 are formed in an upper part of the cylinder block 2 so as to be lined up in the cylinder arrayed direction. A crankcase 5 is formed in a lower part of the cylinder block 2. Note that only one cylinder bore 4 is illustrated in Fig. 1.

A piston 20 is slidably (reciprocatably) inserted into the cylinder bore 4. The piston 20 is coupled to a crankshaft 7 via a connecting rod 6. The crankshaft 7 is accommodated in the crankcase 5. The piston 20 defines a combustion chamber 8, together with the cylinder bore 4 and the cylinder head 3.

Below, the axial direction (reciprocating direction) of the piston 20 may be referred to as the "up-and-down direction." Further, the combustion chamber 8 side in the axial direction of the piston 20 may be referred to as "upward." The opposite side of the combustion chamber 8 in the axial direction of the piston 20 may be referred to as "downward." When the engine 1 is disposed so as to be leaned, the up-and-down direction may not be in agreement in the vertical direction.

An intake port 9 is formed in the cylinder head 3 for every cylinder bore 4. An intake valve 10 is disposed at the intake port 9. The intake valve 10 opens and/or closes a part between the combustion chamber 8 and the intake port 9 at a given timing particularly by using a valve operating mechanism (not illustrated). An exhaust port 11 is formed in the cylinder head 3 for every cylinder bore 4. An exhaust valve 12 is disposed at the exhaust port 11. The exhaust valve 12 opens and/or closes a part between the combustion chamber 8 and the exhaust port 11 at a given timing by using a valve operating mechanism (not illustrated).

An injector (not illustrated) may be attached to the cylinder head 3 for every cylinder bore 4. The injector injects fuel into the combustion chamber 8. The fuel may be gasoline, for example. Further, a spark plug (not illustrated) may be attached to the cylinder head 3 for every cylinder bore 4. The spark plug forcibly ignites the mixture gas of fuel and air inside the combustion chamber 8 during SI combustion. A lower surface of the cylinder head 3 (i.e., a ceiling surface of the combustion chamber 8) may have a so-called pentroof shape.

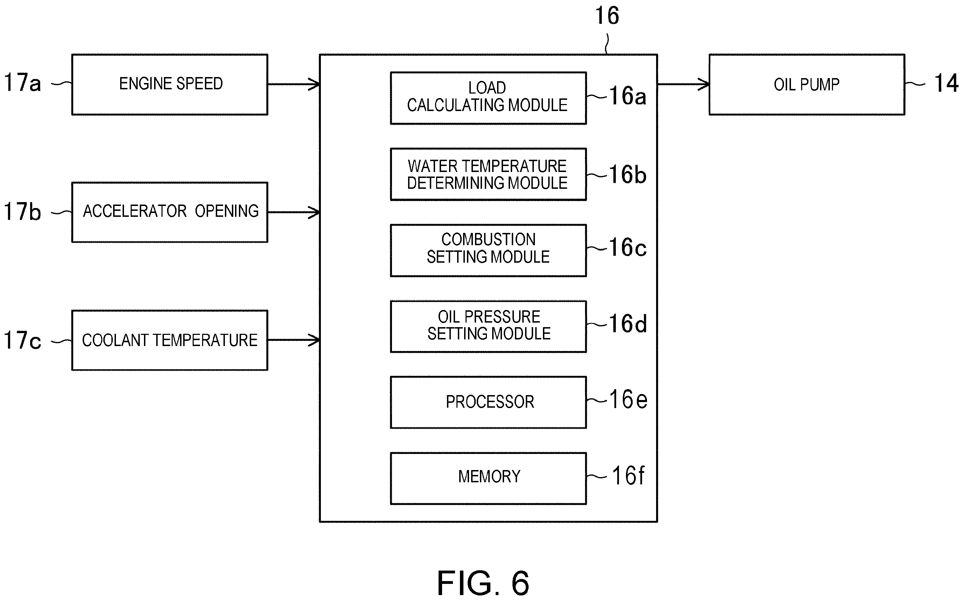

Inside the cylinder block 2, a main gallery 13 extends in the cylinder arrayed direction. Oil pumped from an oil pump 14 (see Fig. 6) flows into the main gallery 13. An oil jet 15 is attached to the crankcase 5, at a position where it does not interfere with the connecting rod 6 and the crankshaft 7.

The oil jet 15 may have a nozzle part 15a and a valve part 15b. A tip end of the nozzle part 15a faces a back surface 21b of a crown part 21 (described later) in the piston 20. A ball-shaped valve body (not illustrated) and a spring (not illustrated) are built inside the valve part 15b. The spring biases the valve body into a closed state. The oil pump 14 supplies oil to the oil jet 15 via the main gallery 13. In detail, the oil is supplied to the oil jet 15 via a branched passage which is branched from the main gallery 13.

The oil jet 15 is configured so that, when an oil pressure of oil which flows through the main gallery 13 (a discharge pressure of the oil pump 14) is below a given value, the valve body of the valve part 15b may be maintained in the closed state according to the biasing force of the spring. On the other hand, the oil jet 15 is configured so that, when the oil pressure of the oil which flows through the main gallery 13 (the discharge pressure of the oil pump 14) is above the given value, the valve body of the valve part 15b become in an open state, while resisting the biasing force of the spring, to inject oil toward the back surface 21b of the crown part 21 (described later) in the piston 20 (see "L" in Fig. 1).

Although described later in detail, a controller 16 (see Fig. 6) is connected to the oil pump 14. The controller 16 is an ECU (Engine Control Unit), for example.

### (Structure of Piston)

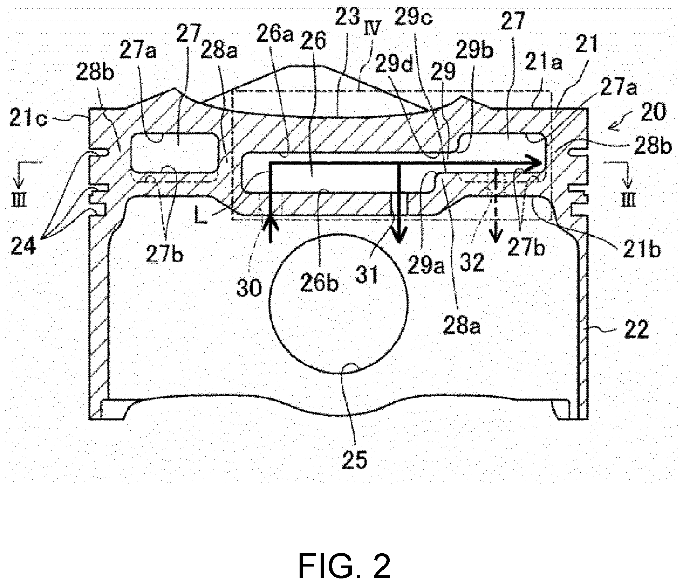

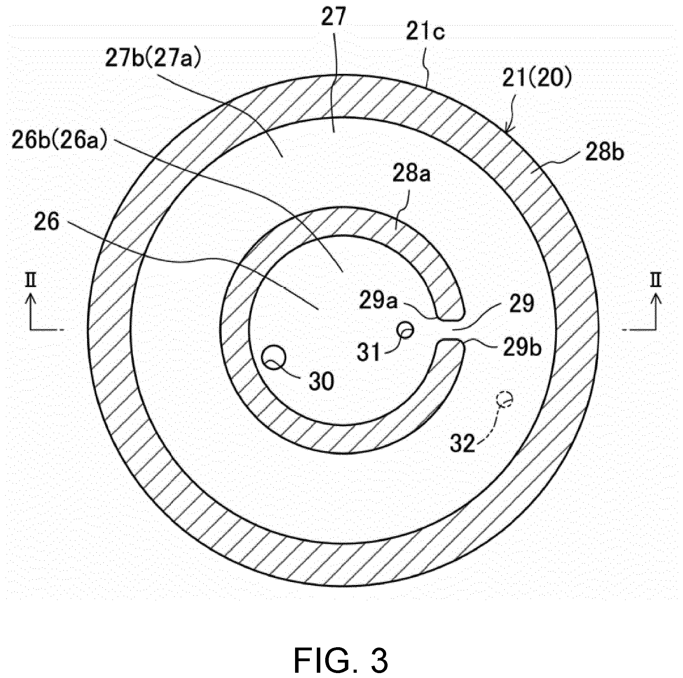

The structure of the piston 20 is described with reference to Figs. 2 and 3. Fig. 2 is an elevational cross-sectional view of the piston 20, where a cross section taken along a line II-II in Fig. 3 is illustrated. Fig. 3 is a plane cross-sectional view of the piston 20, where a cross section taken along a line III-III in Fig. 2 is illustrated.

As illustrated in Fig. 2, the piston 20 particularly includes the crown part 21 and a skirt part 22. The crown part 21 has a substantially disc shape. The crown part 21 is a part which slides with respect to the cylinder bore 4. The crown part 21 includes a crown surface 21a, and the back surface 21b on the opposite side of the crown surface 21a. The crown surface 21a defines the combustion chamber 8, together with the cylinder head 3 and the cylinder bore 4. The crown surface 21a is bulged toward the ceiling surface of the combustion chamber 8. A cavity 23 is formed in a center part of the crown surface 21a. Annular grooves 24 are formed in an outer circumference 21c of the crown part 21. A piston ring (not illustrated) is attached to the groove 24. The back surface 21b is formed so that its center part projects downwardly from its outer circumferential part.

The skirt part 22 extends downwardly from the outer circumference 21c of the crown part 21. A pin hole 25 for inserting a piston pin (not illustrated) is formed in the skirt part 22. The piston pin is to couple the connecting rod 6 to the piston 20.

The crown part 21 may be configured to be dividable in the up-and-down direction at the line III-III in Fig. 2.

As illustrated in Figs. 2 and 3, a first cavity 26 and a second cavity 27 which are partitioned from each other are formed inside the crown part 21 (i.e., between the crown surface 21a and the back surface 21b). The first cavity 26 is located relatively on the center side of the second cavity 27 in the radial direction of the piston 20. The second cavity 27 is located relatively on the outer circumference side of the first cavity 26 in the radial direction of the piston 20.

As illustrated in Fig. 3, the first cavity 26 is formed in a circle in the center part of the crown part 21, when seen in the axial direction of the piston 20. The second cavity 27 is formed in an annular shape which surrounds the entire circumference of the first cavity 26 on the outer circumference side of the crown part 21, when seen in the axial direction of the piston 20.

As illustrated in Fig. 3, the first cavity 26 and the second cavity 27 are defined by an annual inner circumferential wall part 28a formed in the center part of the crown part 21, and an outer circumferential wall part 28b of the crown part 21. The inner circumferential wall part 28a (hereinafter, referred to as the "partitioning wall 28a") defines the first cavity 26 and the second cavity 27. The outer circumferential wall part 28b defines the second cavity 27 and the exterior of the crown part 21.

As illustrated in Figs. 2 and 3, a communicating hole 29 is formed in the partitioning wall 28a. The communicating hole 29 penetrates the partitioning wall 28a to communicate the first cavity 26 with the second cavity 27. The penetrating direction of the communicating hole 29 is the radial direction of the piston 20. An opening of the communicating hole 29 on the first cavity 26 side is referred to as an "entrance 29a." An opening of the communicating hole 29 on the second cavity 27 side is referred to as an "exit 29b."

As illustrated in Fig. 2, the first cavity 26 includes a ceiling surface 26a on the combustion chamber 8 side, and a bottom surface 26b on the opposite side from the combustion chamber 8. In the first cavity 26, the surface area of the ceiling surface 26a is substantially equal to the surface area of the bottom surface 26b. Similarly, the second cavity 27 includes a ceiling surface 27a on the combustion chamber 8 side, and a bottom surface 27b on the opposite side from the combustion chamber 8. In the second cavity 27, the surface area of the ceiling surface 27a is substantially equal to the surface area of the bottom surface 27b.

As illustrated in Figs. 2 and 3, an introduction hole 30 is formed in the bottom surface 26b of the first cavity 26. The introduction hole 30 introduces into the first cavity 26 the oil injected toward the back surface 21b of the crown part 21 from the oil jet 15. A discharge hole 31 is formed in the bottom surface 26b of the first cavity 26. The discharge hole 31 discharges the oil from the first cavity 26.

As illustrated in Figs. 2 and 3, a distance between the discharge hole 31 and the entrance 29a of the communicating hole 29 in the first cavity 26 may be shorter than a distance between the introduction hole 30 and the entrance 29a of the communicating hole 29.

As illustrated in Fig. 2, the bottom surface 27b of the second cavity 27 and a lower end part (bottom surface) 29c of the communicating hole 29 forms substantially the same surface. The ceiling surface 26a of the first cavity 26 and an upper end part (ceiling surface) 29d of the communicating hole 29 forms substantially the same surface.

As illustrated in Fig. 2, the ceiling surface 27a of the second cavity 27 is located on the combustion chamber 8 side of the ceiling surface 26a of the first cavity 26. That is, the ceiling surface 27a of the second cavity 27 is located higher than the ceiling surface 26a of the first cavity 26.

As illustrated in Fig. 3, the surface area of the ceiling surface 27a of the second cavity 27 may be larger than the surface area of the ceiling surface 26a of the first cavity 26.

### (Operation and Effects)

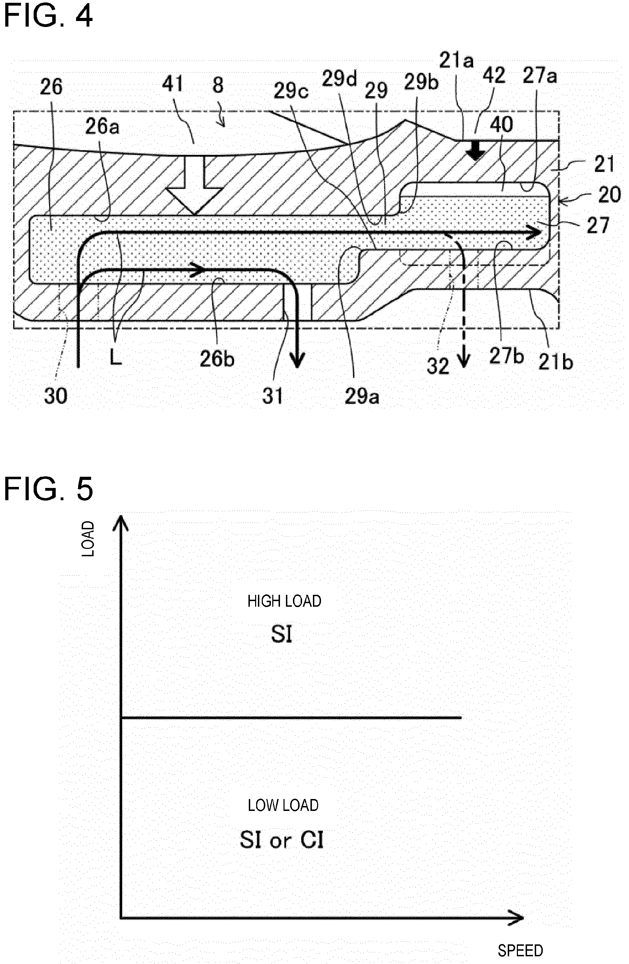

Operation and effects of the structure of the piston 20 according to this embodiment are described with mainly reference to Fig. 4.

The oil injected toward the back surface 21b of the crown part 21 in the piston 20 from the nozzle part 15a of the oil jet 15 is introduced into the first cavity 26 on the center side via the introduction hole 30, as illustrated by the reference character "L" in Fig. 4.

Then, part of the oil in the first cavity 26 flows into the second cavity 27 on the outer circumference side via the communicating hole 29. The remaining oil in the first cavity 26 is discharged to the exterior of the crown part 21 from the discharge hole 31 formed in the bottom surface 26b of the first cavity 26. Therefore, the oil circulates inside the crown part 21 to cool the crown part 21.

Since the ceiling surface 27a of the second cavity 27 is located on the combustion chamber 8 side of the ceiling surface 26a of the first cavity 26 (located at the higher position), the oil which flowed into the second cavity 27 via the communicating hole 29 is not filled in the second cavity 27, and therefore, the oil does not reach the ceiling surface 27a. Therefore, an air layer 40 is formed near the ceiling surface 27a of the second cavity 27.

Heat of a mixture gas 41 on the center side in the combustion chamber 8 is taken away by the oil which flows through the first cavity 26, and the temperature of the mixture gas 41 easily decreases. On the other hand, a mixture gas 42 on the outer circumference side in the combustion chamber 8 is insulated by the air layer 40 formed near the ceiling surface 27a of the second cavity 27, and decreasing the temperature thereof is difficult. Therefore, the temperature of the mixture gas 42 on the outer circumference side in the combustion chamber 8 becomes higher than the temperature of the mixture gas 41 on the center side in the combustion chamber 8. That is, such a temperature distribution of the combustion chamber 8 that the temperature of the mixture gas 42 on the outer circumference side becomes higher than the temperature of the mixture gas 41 on the center side is realized.

Therefore, during compression ignition, compressed self-ignition of the mixture gas 42 is first started on the outer circumference side of the combustion chamber 8, and compressed self-ignition of the mixture gas 41 then takes place on the center side of the combustion chamber 8. Therefore, unburnt fuel loss of the mixture gases 41 and 42 inside the combustion chamber 8 (particularly, the mixture gas 42 on the outer circumference side) during the compression ignition, decreases.

As described above, both the cooling of the piston 20 and the unburnt fuel loss reduction in the mixture gas 41 and 42 inside the combustion chamber 8 during the compression ignition, can be achieved.

In this embodiment, the distance between the discharge hole 31 in the first cavity 26 and the entrance 29a of the communicating hole 29 is shorter than the distance between the introduction hole 30 and the entrance 29a of the communicating hole 29. Therefore, as compared with a case where the distance between the discharge hole 31 in the first cavity 26 and the entrance 29a of the communicating hole 29 is longer than the distance between the introduction hole 30 and the entrance 29a of the communicating hole 29, it is difficult for the oil inside the first cavity 26 to flow into the second cavity 27 via the communicating hole 29. Therefore, the air layer 40 becomes much easier to be formed near the ceiling surface 27a of the second cavity 27.

Since the second cavity 27 is formed in the annular shape which surrounds the entire circumference of the first cavity 26 (see Fig. 3), the compressed self-ignition of the mixture gas 42 is started from the outer circumference side throughout the circumference of the combustion chamber 8.

By increasing the surface area of the ceiling surface 27a of the second cavity 27, the volume of the air layer 40 formed near the ceiling surface 27a of the second cavity 27 can be increased more.

### (Control of Engine)

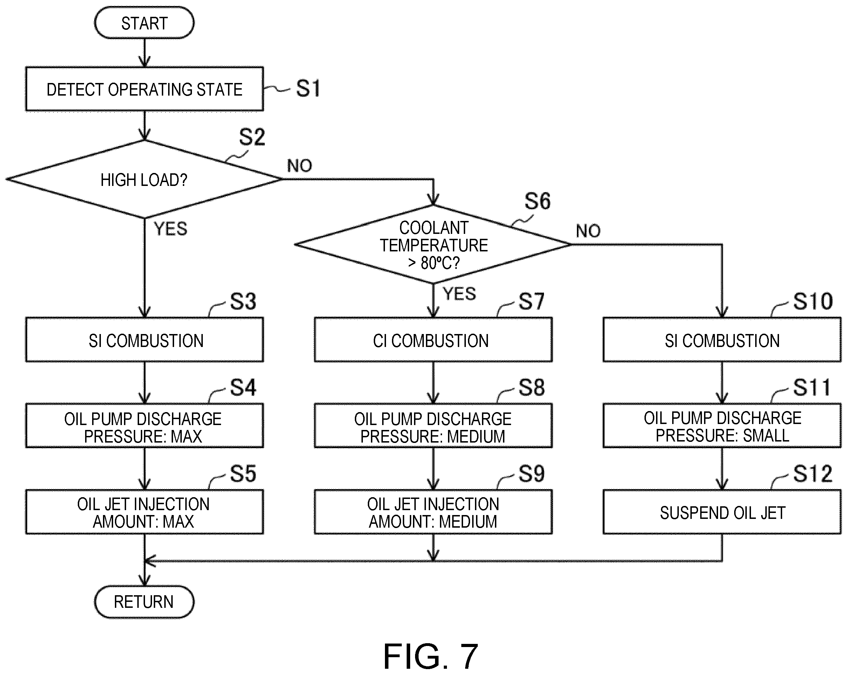

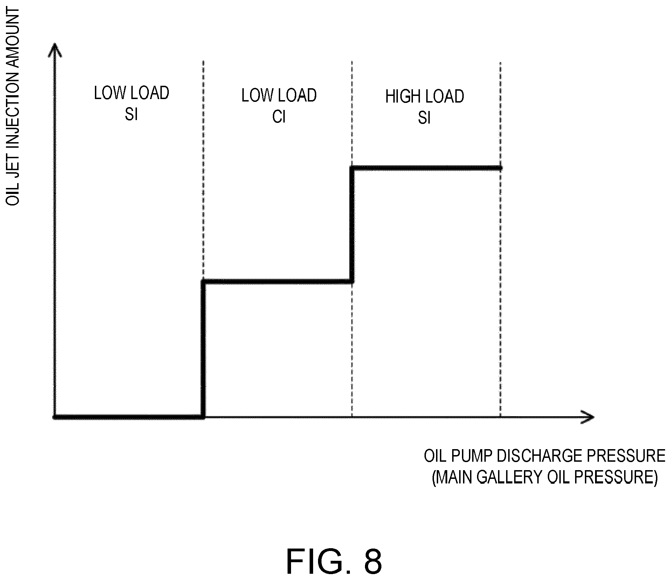

A control mode (engine system) of the engine 1 is described with reference to Figs. 5 to 8. Fig. 5 is a view illustrating an operating range map of the engine 1. Fig. 6 is a block diagram illustrating a control mode of the engine 1. Fig. 7 is a flowchart illustrating a control flow of the engine 1. Fig. 8 is a graph illustrating a relationship between a discharge pressure of the oil pump 14 and an injection amount of the oil jet 15, in each operating range.

The engine 1 is able to switch the combustion mode between CI combustion and SI combustion. In this example, as illustrated in Fig. 5, the engine 1 may perform the SI combustion in a high-load range (or a higher-load range) and may perform the CI combustion or the SI combustion in a low-load range (or a lower-load range), regardless of an engine speed.

As illustrated in Fig. 6, the controller 16 may includes a load calculating module 16a, a water temperature determining module 16b, a combustion setting module 16c, and an oil pressure setting module 16d. These modules may be executed by a processor 16e (e.g., a central processing unit (CPU)) to perform their respective functions and may be stored in memory 16f as software modules. An engine speed 17a, an accelerator opening 17b, and/or a coolant temperature 17c of the engine 1 are inputted into the controller 16. In detail, the engine speed 17a, the accelerator opening 17b, and the coolant temperature 17c are detected by one or various sensors. The various sensors output signals corresponding to respective detection quantities. Output signals from the various sensors are inputted into the controller 16.

The load calculating module 16a particularly calculates a target load of the engine 1 based on the accelerator opening 17b. The water temperature determining module 16b particularly determines whether the coolant temperature 17c of the engine 1 is above a given value (in this example, 80°C). The combustion setting module 16c particularly sets the combustion mode based on the target load and/or the coolant temperature 17c of the engine 1. The oil pressure setting module 16d sets a discharge pressure of the oil pump 14 based on the combustion mode.

Here, a pressure of oil which flows through the main gallery 13 (an oil pressure of the main gallery 13) may be substantially equal to the discharge pressure of the oil pump 14. Further, the coolant temperature 17c correlates with the temperature inside the combustion chamber 8 so that the coolant temperature 17c becomes higher as the temperature inside the combustion chamber 8 increases. The temperature inside the combustion chamber 8 is more suitable for CI combustion as it becomes higher (the coolant temperature 17c becomes higher).

As illustrated in Fig. 7, first at Step S1, an operating state of the engine 1 detected by the one or various sensors (in detail, the engine speed 17a, the accelerator opening 17b, and/or the coolant temperature 17c) may be inputted into the controller 16.

Next, at Step S2, the load calculating module 16a may calculate a target load of the engine 1 based on the accelerator opening 17b.

If the target load of the engine 1 is calculated as high load (or higher load) at Step S2, it shifts to Step S3 where the combustion setting module 16c may set the combustion mode to SI combustion. Then, at Step S4, the oil pressure setting module 16d may set the discharge pressure of the oil pump 14 to a maximum pressure. At this time, at Step S5, the oil injection amount from the oil jet 15 becomes a maximum amount, as illustrated in Fig. 8.

If the target load of the engine 1 is not calculated as high load (i.e., it is low load, or lower load) at Step S2, it shifts to Step S6. At Step S6, the water temperature determining module 16b may determine whether the coolant temperature 17c of the engine 1 is above 80°C.

If determined that the coolant temperature 17c is above 80°C at Step S6, it shifts to Step S7 where the combustion setting module 16c may set the combustion mode to CI combustion. Then, at Step S8, the oil pressure setting module 16d may set the discharge pressure of the oil pump 14 as "medium." At this time, at Step S9, the oil injection amount from the oil jet 15 becomes about medium, as illustrated in Fig. 8.

If determined that the coolant temperature 17c is not above 80°C (i.e., below 80°C) at Step S6, it shifts to Step S10 where the combustion setting module 16c may set the combustion mode to SI combustion. Then, at Step S11, the oil pressure setting module 16d may set the discharge pressure of the oil pump 14 as "small." In detail, the oil pressure setting module 16d may set the discharge pressure of the oil pump 14 (the pressure of the oil which flows through the main gallery 13) lower than a given value required for opening the valve body of the valve part 15b in the oil jet 15. At this time, at Step S12, the oil injection amount from the oil jet 15 becomes zero (i.e., the oil jet 15 is suspended), as illustrated in Fig. 8.

As comparing CI combustion in the low-load range with SI combustion in the high-load range, the controller controls the oil pump 14 so that the discharge pressure of the oil pump 14 is lowered when the combustion mode is CI combustion, as compared with a case where the combustion mode is SI combustion.

Therefore, since the oil injection amount from the oil jet 15 during CI combustion at low load becomes less than during SI combustion at high load, it is difficult for the oil to fill the second cavity 27, and the air layer 40 easily forms near the ceiling surface 27a of the second cavity 27.

Thus, during CI combustion in which the temperature of the mixture gas 42 on the outer circumference side in the combustion chamber 8 needs to be higher, the air layer 40 is positively formed near the ceiling surface 27a of the second cavity 27, and during SI combustion (during flame propagation) in which the temperature of the mixture gas 42 on the outer circumference side in the combustion chamber 8 does not need to be high, a small air layer 40 is formed near the ceiling surface 27a of the second cavity 27.

### (Other Embodiments)

Although the present disclosure is described with the suitable embodiment as described above, such a description is not to limit the present disclosure, and various alterations may be possible.

Although in the above embodiment the discharge hole 31 is formed only in the bottom surface 26b of the first cavity 26, it is not limited to this configuration. As illustrated by two-dot chain lines in Figs. 2 to 4, not only in the bottom surface 26b of the first cavity 26, a discharge hole 32 may be formed in the bottom surface 27b of the second cavity 27. That is, the discharge holes 31 and 32 may be formed in both the bottom surface 26b of the first cavity 26 and the bottom surface 27b of the second cavity 27.

According to this structure, since the discharge hole 31 is formed in the bottom surface 26b of the first cavity 26, it is difficult for the oil in the first cavity 26 flow into the second cavity 27 via the communicating hole 29. Further, since the discharge hole 32 is formed in the bottom surface 27b of the second cavity 27, the oil which flowed into the second cavity 27 via the communicating hole 29 is rapidly discharged from the discharge hole 32 to the exterior of the crown part 21. Therefore, it is more difficult for the oil to fill the second cavity 27 and reach the ceiling surface 27a. Therefore, the air layer 40 easily forms near the ceiling surface 27a of the second cavity 27.

Further, the discharge hole 32 may be provided only in the bottom surface 27b of the second cavity 27, without the discharge hole 31 being provided in the bottom surface 26b of the first cavity 26.

As illustrated by the two-dot chain lines in Figs. 2 and 4, the bottom surface 27b of the second cavity 27 may be located on the opposite side of the combustion chamber 8 with respect to the lower end part (bottom surface) 29c of the communicating hole 29. Therefore, since the oil which flowed into the second cavity 27 via the communicating hole 29 has difficulty reaching the ceiling surface 27a of the second cavity 27, the air layer 40 easily forms near the ceiling surface 27a of the second cavity 27.

The second cavity 27 may be formed in a square annular shape which surrounds the entire circumference of the first cavity 26, not the circular or round shape. Further, the second cavity 27 does not need to surround the entire circumference of the first cavity 26, and, for example, it may be formed in a C annular shape (an arc shape). Moreover, the second cavity 27 may be formed only in a partial range on the outer circumference side of the first cavity 26.

The engine 1 may perform CI combustion in all the operating ranges, without performing SI combustion.

Since the present disclosure is applicable to the piston structure of the engine and the engine system, it is very useful and high in the industrial applicability.

It should be understood that the embodiments herein are illustrative and not restrictive, since the scope of the invention is defined by the appended claims rather than by the description preceding them.

### DESCRIPTION OF REFERENCE CHARACTERS

- 1: Engine
- 8: Combustion Chamber
- 13: Main Gallery
- 14: Oil Pump
- 15: Oil Jet
- 16: Controller
- 20: Piston
- 21: Crown Part
- 21a: Crown Surface
- 21b: Back Surface
- 26: First Cavity
- 26a: Ceiling Surface
- 26b: Bottom Surface
- 27: Second Cavity
- 27a: Ceiling Surface
- 27b: Bottom Surface
- 28a: Partitioning Wall (Inner Circumferential Wall Part)
- 28b: Outer Circumferential Wall Part
- 29: Communicating Hole
- 29a: Entrance
- 29b: Exit
- 29c: Lower End Part
- 29d: Upper End Part
- 30: Introduction Hole
- 31: Discharge Hole
- 32: Discharge Hole
- 40: Air Layer
- 41: Mixture Gas
- 42: Mixture Gas

## Claims

1. A piston structure of an engine (1), comprising:
a piston (20) having a crown part (21) including a crown surface (21a) defining a combustion chamber (8), and a back surface (21b) on the opposite side of the crown surface (21a);
an oil jet (15) configured to inject oil toward the back surface (21b);
a first cavity (26) and a second cavity (27) formed inside the crown part (21), the first cavity (26) and the second cavity (27) being partitioned from each other, the first cavity (26) being located on a center side, the second cavity (27) being located on an outer circumference side of the first cavity (26), and each of the first cavity (26) and the second cavity (27) including a ceiling surface (26a, 27a) on a combustion chamber side and a bottom surface (26b, 27b) on the opposite side of the combustion chamber (8);
a communicating hole (29) that is formed in a partitioning wall (28a) between the first cavity (26) and the second cavity (27) and communicates the first cavity (26) with the second cavity (27);
an introduction hole (30) that is formed in the bottom surface (26b) of the first cavity (26) and configured to introduce into the first cavity (26) the oil injected toward the back surface (21b) from the oil jet (15); and
a discharge hole (31, 32) that is formed in the bottom surface (26b, 27b) of at least one of the first cavity (26) and the second cavity (27) and configured to discharge the oil,
wherein the ceiling surface (27a) of the second cavity (27) is located on the combustion chamber side of the ceiling surface (26a) of the first cavity (26).

2. The piston structure of claim 1,
wherein the discharge hole (31) is formed in the bottom surface (26b) of the first cavity (26), and
wherein a distance between the discharge hole (31) in the first cavity (26) and the communicating hole (29) is shorter than a distance between the introduction hole (30) and the communicating hole (29).

3. The piston structure of claim 1 or 2, wherein the second cavity (27) has an annular shape surrounding the entire circumference of the first cavity (26).

4. The piston structure of any one of the preceding claims, wherein a surface area of the ceiling surface (27a) of the second cavity (27) is larger than a surface area of the ceiling surface (26a) of the first cavity (26).

5. The piston structure of any one of the preceding claims, wherein the discharge hole (31, 32) is formed in the bottom surface (26b, 27b) of both the first cavity (26) and the second cavity (27).

6. The piston structure of any one of the preceding claims, wherein the first cavity (26) is formed in a circular shape in a center part of the crown part (21), when seen in an axial direction of the piston (20).

7. The piston structure of any one of the preceding claims, wherein the partitioning wall (28a) is formed in an annular shape.

8. The piston structure of any one of the preceding claims, wherein the first cavity (26) is defined by the partitioning wall (28a).

9. The piston structure of any one of the preceding claims, wherein the second cavity (27) is defined by the partitioning wall (28a) and an outer circumferential wall part (28b) of the crown part (21).

10. The piston structure of any one of the preceding claims, wherein the communicating hole (29) is configured to penetrate the partitioning wall (28a) in a radial direction of the piston (20).

11. The piston structure of any one of the preceding claims, wherein a temperature on an outer circumference side of the piston (20) is higher than a temperature on a center side of the piston (20).

12. An engine (1) comprising the piston structure of any one of the preceding claims.

13. The engine (1) of claim 12, wherein the engine (1) is configured to first cause compressed self-ignition on an outer circumference side of the combustion chamber (8), and then to cause compressed self-ignition on a center side of the combustion chamber (8).

14. An engine system comprising:
the engine (1) of claim 12 or 13, the engine (1) being configured to switch a combustion mode between compression ignition combustion and spark ignition combustion;
an oil pump (14) configured to supply the oil to the oil jet (15) via a main gallery (13); and
a controller (16) configured to set a discharge pressure of the oil pump (14) based on the combustion mode, the controller (16) being configured to control the oil pump (14) to reduce a discharge pressure of the oil pump (14) when the combustion mode is the compression ignition combustion, as compared with a case where the combustion mode is the spark ignition combustion.
